(19) Europäisches Patentamt / European Patent Office / Office européen des brevets

(11) **EP 3 012 658 B1**

(12) **EUROPEAN PATENT SPECIFICATION**

(45) Date of publication and mention of the grant of the patent:
**16.08.2017 Bulletin 2017/33**

(51) Int Cl.:
**G01S 13/90** $^{(2006.01)}$

(21) Application number: **15188861.7**

(22) Date of filing: **08.10.2015**

(54) **METHOD AND DEVICE FOR IMPLEMENTING SAR IMAGING**

VERFAHREN UND VORRICHTUNG ZUR IMPLEMENTIERUNG VON SAR-BILDGEBUNG

PROCÉDÉ ET DISPOSITIF POUR METTRE EN OEUVRE UNE IMAGERIE SAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2014 CN 201410563426**

(43) Date of publication of application:
**27.04.2016 Bulletin 2016/17**

(73) Proprietor: **Institute of Electronics, Chinese Academy of Sciences**
**Beijing 100190 (CN)**

(72) Inventors:
  • **Wang, Yu**
    **100190 Beijing (CN)**
  • **Guo, Lei**
    **100190 Beijing (CN)**
  • **Zhang, Zhimin**
    **100190 Beijing (CN)**
  • **Deng, Yunkai**
    **100190 Beijing (CN)**
  • **Wang, Wei**
    **100190 Beijing (CN)**
  • **Li, Ning**
    **100190 Beijing (CN)**
  • **Wang, Chunle**
    **100190 Beijing (CN)**

(74) Representative: **Gulde & Partner**
    **Patent- und Rechtsanwaltskanzlei mbB**
    **Wallstraße 58/59**
    **10179 Berlin (DE)**

(56) References cited:
    **CN-A- 103 869 313**

  • **FEDERICA BORDONI ET AL: "Ambiguity Suppression by Azimuth Phase Coding in Multichannel SAR Systems", IEEE TRANSACTIONS ON GEOSCIENCE AND REMOTE SENSING, IEEE SERVICE CENTER, PISCATAWAY, NJ, US, vol. 50, no. 2, 1 February 2012 (2012-02-01), pages 617-629, XP011397759, ISSN: 0196-2892, DOI: 10.1109/TGRS.2011.2161672**
  • **DALL J ET AL: "Azimuth phase coding for range ambiguity suppression in SAR", GEOSCIENCE AND REMOTE SENSING SYMPOSIUM, 2004. IGARSS '04. PROCEEDINGS . 2004 IEEE INTERNATIONAL ANCHORAGE, AK, USA 20-24 SEPT. 2004, PISCATAWAY, NJ, USA,IEEE, vol. 3, 20 September 2004 (2004-09-20), pages 1734-1737, XP010751947, ISBN: 978-0-7803-8742-3**

EP 3 012 658 B1

## Description

### TECHNICAL FIELD

The present disclosure relates to Synthetic Aperture Radar (SAR) techniques, and in particular to a method and device for implementing SAR imaging.

### BACKGROUND

In a multi-channel SAR system, when a transmitter of the SAR system transmits multiple pulses in range direction, different echo pulses may return simultaneously to the transmitter of the SAR system due to differences in slant distance, thus resulting a range ambiguous signal. Accordingly, when the system has a singular point, severe range ambiguity will be resulted due to the system's relatively high Pulse Recurrence Frequency (PRF) around the singular point of the system and relatively large surveying and mapping width in azimuth direction, and imaging quality of the system will be lowered to a great extent.

To sum up, how to improve imaging quality of the multi-channel SAR system is a problem that has yet to be solved.

Federica Bordoni Et. Al.: "Ambiguity Suppression by Azimuth Phase Coding in Multichannel SAR Systems" "http://ieeexplore.ieee.org/xpl/RecentIssue.jsp?punumber=36" IEEE Transactions on Geoscience and Remote Sensing, ⊥ Vol. 50, no. 2, 2012-02-01, pages 617-629) investigates the possibility of applying the APC technique to the new, forthcoming generation of multichannel SAR systems, based on digital beamforming on receive. The extension of APC to multichannel SAR systems is mathematically described. Specific merit figures are defined to quantify the APC performance. A numerical analysis is developed to characterize the influence on the APC behaviors of the main SAR system parameters. Finally, an example of APC performance is provided, by considering two multichannel SAR systems based on a planar and a reflector antenna.

CN103869313A discloses an inhibition method and device for the distance direction blur of a multichannel synthetic aperture radar (SAR). The inhibition method for the distance direction blur of the SAR comprises the steps of performing phase modulation on an emission signal and performing phase demodulation on an echo signal by using azimuth phase coding, so a distance blurred signal and the target signal are separated from each other in the azimuth Doppler domain; generating an azimuth DFB (distributed feed back) vector by using a multichannel collecting signal, and forming zero trap at the position where the distance direction blurred signal is positioned by using the DFB vector so as to filter out the distance direction blur in the target signal; imaging the target signal of which the distance direction blur is filtered out, thus obtaining the target SAR image with the inhibited distance direction blur.

Dall J. Et. Al.: "Azimuth phase coding for range ambiguity suppression in SAR" "http://ieeexplore.ieee.org/xpl/mostRecentIssue.jsp?punumber=9436" Geoscience and Remote Sensing Symposium, 2004. IGARSS '04. Proceedings. 2004 IEEE International⊥, vol. 3, 2004-09-20, pages 1734-1737) proposes a novel ambiguity suppression technique. Range ambiguities in synthetic aperture radar (SAR) images are eliminated with an azimuth filter after having applied an azimuth phase modulation to the transmitted pulses and a corresponding demodulation to the received pulses. The technique excels by actually eliminating the ambiguities rather than just defocusing them as most other techniques do. This makes the proposed technique applicable to distributed targets. The range ambiguitysuppression permits the pulse repetition frequency (PRF) to exceed the upper limit otherwise defined by the antenna elevation dimension. The fundamental antenna area constraint still applies, but the PRF can be chosen with more freedom. In addition to ambiguity suppression, potential applications include nadir return elimination and signal-to-noise ratio improvement.

### SUMMARY

In view of the above, embodiments of the disclosure are intended to provide a method and device for implementing SAR imaging that can effectively inhibit range ambiguity of an SAR system around a singular point, thereby improving imaging quality of the multi-channel SAR system.

To this end, the technical solutions of embodiments of the disclosure are implemented as follows.

An embodiment of the disclosure provides a method for implementing SAR imaging in a multi-channel SAR system having a singular point, and the method includes:

performing azimuth phase modulation on an emission signal in an azimuth Doppler domain to obtain a modulated emission signal, and transmitting the modulated emission signal;
receiving an echo signal, and performing azimuth phase demodulation on the received echo signal in the azimuth Doppler domain to obtain the demodulated echo signal;
the demodulated echo signal is filtered to obtain a filtered echo signal; and

imaging processing is performed on the filtered echo signal to obtain an imaging result,
wherein the step that the demodulated echo signal is filtered to obtain a filtered echo signal may include: a filter is constructed using channel data discarded in a singular point solving method; and the demodulated echo signal is filtered by the constructed filter to obtain the filtered echo signal,
wherein the system response matrix **H(f)** of the multi-channel SAR system is represented by:

$$\mathbf{H(f)} = \begin{vmatrix} H_1(f) & \cdots & H_n(f) \\ H_1(f+PRF) & \cdots & H_n(f+PRF) \\ \cdots & \cdots & \cdots \\ H_1(f+(N-1)PRF) & \cdots & H_n(f+(N-1)PRF) \end{vmatrix},$$

wherein $H_i(f)$ is represented by:

$$H_i(f) = \exp\left[-j\pi\left(\frac{(i-1)^2\Delta x_i^2}{2\lambda R_0} + \frac{(i-1)\Delta x_i}{v}f\right)\right](i=1,2,\cdots,N),$$

where $\lambda$ is the wavelength of a carrier, $R_0$ is a minimum slant distance from a target to a radar, $\Delta x_i$ is an azimuth position of each channel center, $v$ is a flying speed of the radar, and $\Delta x$ is an interval between two adjacent channels, wherein PRF values corresponding to the last $k$ rows in **H(f)** are referred to as singular points.

In the above solution, the method may further include: a range ambiguity inhibitory effect of the obtained imaging result is determined according to a preset formula for calculating range ambiguity.

An embodiment of the disclosure further provides a device for implementing SAR imaging in a multi-channel SAR system having a singular point, and the device includes:

a modulation sub-module configured to perform azimuth phase modulation on an emission signal in an azimuth Doppler domain to obtain a modulated emission signal;
a transmission sub-module configured to transmit the modulated emission signal;
a reception sub-module configured to receive an echo signal;
a demodulation sub-module configured to perform azimuth phase demodulation on the received echo signal in the azimuth Doppler domain to obtain the demodulated echo signal;
a filtering module configured to filter the demodulated echo signal to obtain a filtered echo signal; and
an imaging processing module configured to perform imaging processing on the filtered echo signal to obtain an imaging result,
wherein the filtering module includes:

a construction sub-module configured to construct a filter using channel data discarded in a singular point solving method; and
a filtering sub-module configured to filter, through the constructed filter, the demodulated echo signal to obtain the filtered echo signal,
wherein the system response matrix **H(f)** of the multi-channel SAR system is represented by:

$$\mathbf{H(f)} = \begin{vmatrix} H_1(f) & \cdots & H_n(f) \\ H_1(f+PRF) & \cdots & H_n(f+PRF) \\ \cdots & \cdots & \cdots \\ H_1(f+(N-1)PRF) & \cdots & H_n(f+(N-1)PRF) \end{vmatrix},$$

wherein $H_i(f)$ is represented by:

$$H_i\left(f\right) = \exp\left[-j\pi\left(\frac{(i-1)^2\Delta x_i^{\,2}}{2\lambda R_0} + \frac{(i-1)\Delta x_i}{v}f\right)\right](i = 1, 2, \cdots, N)$$

,

where $\lambda$ is the wavelength of a carrier, $R_0$ is a minimum slant distance from a target to a radar, $\Delta x_i$ is an azimuth position of each channel center, $v$ is a flying speed of the radar, and $\Delta x$ is an interval between two adjacent channels,

wherein PRF values corresponding to the last $k$ rows in **H(f)** are referred to as singular points.

In the above solution, the device may further include:

a determination module configured to determine, according to a preset formula for calculating range ambiguity, a range ambiguity inhibitory effect of the obtained imaging result.

In the method and device for implementing SAR imaging according to the embodiments of the disclosure, an SAR signal is modulated and demodulated to obtain a demodulated echo signal; the demodulated echo signal is filtered to obtain a filtered echo signal; and imaging processing is performed on the filtered echo signal to obtain an imaging result. By means of modulation and demodulation of an SAR signal, the embodiments of the disclosure enable separation of a range ambiguous signal and a target signal in echo signals, and the range ambiguous signal is filtered out through filtering of the echo signals. In this way, it is possible to effectively inhibit range ambiguity of the SAR system around the singular point, thereby improving imaging quality of the multi-channel SAR system.

## BRIEF DESCRIPTION OF THE DRAWINGS

Fig. 1 is a schematic flow chart of a method for implementing SAR imaging according to an embodiment of the disclosure;

Fig. 2 is a schematic flow chart of modulating and demodulating an SAR signal in a method for implementing SAR imaging according to an embodiment of the disclosure;

Fig. 3 is a schematic diagram showing position, of a range ambiguous signal and a target signal of a demodulated echo signal, in an azimuth Doppler domain according to an embodiment of the disclosure;

Fig. 4 is a schematic flow chart of filtering a demodulated echo signal in a method for implementing SAR imaging according to an embodiment of the disclosure;

Fig.5 is a sampling sequence diagram in a case where there is a singular point during reconstruction of a multi-channel system according to related techniques;

Fig. 6 is a schematic structural diagram of a device for implementing SAR imaging according to an embodiment of the disclosure;

Fig. 7 is a schematic structural diagram of a modulation and demodulation module in a device for implementing SAR imaging according to an embodiment of the disclosure; and

Fig. 8 is a schematic structural diagram of a filtering module in a device for implementing SAR imaging according to an embodiment of the disclosure.

## DETAILED DESCRIPTION

In the embodiments of the disclosure, an SAR signal is modulated and demodulated to obtain a demodulated echo signal; the demodulated echo signal is filtered to obtain a filtered echo signal; and imaging processing is performed on the filtered echo signal to obtain an imaging result.

The disclosure will be further elaborated below in combination with accompanying drawings and specific embodiments.

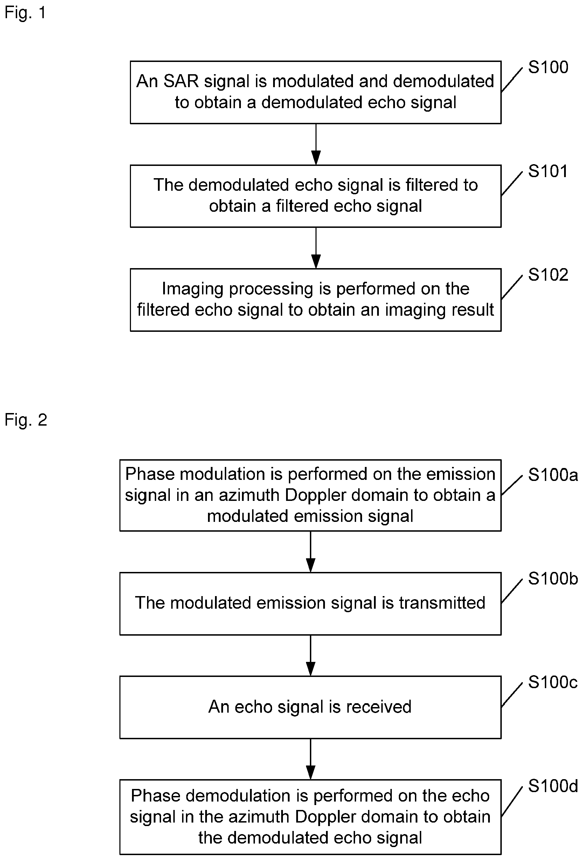

Fig. 1 is a schematic flow chart of a method for implementing SAR imaging according to an embodiment of the disclosure. As shown in Fig. 1, the method for implementing SAR imaging according to the embodiment of the disclosure includes:

step S100, an SAR signal is modulated and demodulated to obtain a demodulated echo signal.

Specifically, an SAR signal is modulated and demodulated using an azimuth phase encoding scheme to obtain a demodulated echo signal.

Herein the SAR signal includes an emission signal and an echo signal.

In the embodiment of the disclosure, as shown in Fig. 2, the step that an SAR signal is modulated and demodulated to obtain a demodulated echo signal may include:

step S100a, phase modulation is performed on the emission signal in an azimuth Doppler domain to obtain a modulated emission signal.

Specifically, the emission signal is modulated with an additional phase $\varphi_{\mathrm{mod}}$ in the azimuth Doppler domain, where $\varphi_{\mathrm{mod}}$ can be represented by below expression (1):

$$\varphi_{\mathrm{mod}} = -\frac{\pi}{M} l^2 \quad (1)$$

where $l$ is the number of pulses of the emission signal, and $M$ is a spectrum shifting factor of the azimuth phase encoding.

Apparently, when the value of $M$ is 1, there is no phase modulation of the emission signal, thus the value of M should be equal to or greater than 2.

step S100b, the modulated emission signal is transmitted;

step S100c, an echo signal is received;

herein the echo signal is an SAR-reflected echo signal of the demodulated emission signal.

step S100d, phase demodulation is performed on the echo signal in the azimuth Doppler domain to obtain the demodulated echo signal.

Specifically, phase demodulation is performed on the echo signal received in step S100c in the azimuth Doppler domain; and the demodulation phase $\varphi_{dem}(n)$ can be represented by below expression (2):

$$\varphi_{dem}(n) = \varphi_{\mathrm{mod}}(n - d) \quad (2)$$

*where n* represents an *n* th echo pulse of the echo signal, *d* represents the number of Pulse Repetition Intervals (PRIs) taken from step S100b of transmitting the modulated emission signal to step S100c of receiving an echo signal.

By means of steps S100a to S100d, the azimuth phase encoding method is used to modulate and demodulate an SAR signal, and it can be seen that each order of the range ambiguous signal of the demodulated echo signal has an additional delay of $k \cdot PRI$ with respect to the target signal (also referred to as useful signal), with $k$ being an ambiguity order. That is to say, after modulation and demodulation of an SAR signal using the azimuth phase encoding method, in the resulting demodulated echo signal there remains an additional residual phase $\varphi_{res}(k,M)$, and $\varphi_{res}(k,M)$ can be represented by below expression (3):

$$\varphi_{res}(k,M) = \frac{2\pi}{M} k \cdot PRF \cdot t_m - \frac{\pi}{M} k^2 \quad (3)$$

where $t_m = n / PRF$ is a slowness time in azimuth direction and *PRF* represents pulse repetition frequency.

It can be seen from the expression (3) that the additional residual phase $\varphi_{res}(k,M)$ remaining in the resulting demodulated echo signal has no effect on the target signal when $k = 0$ ; but for each order of the range ambiguous signal, there is a shift of $k \cdot PRF / M$ in the azimuth Doppler domain.

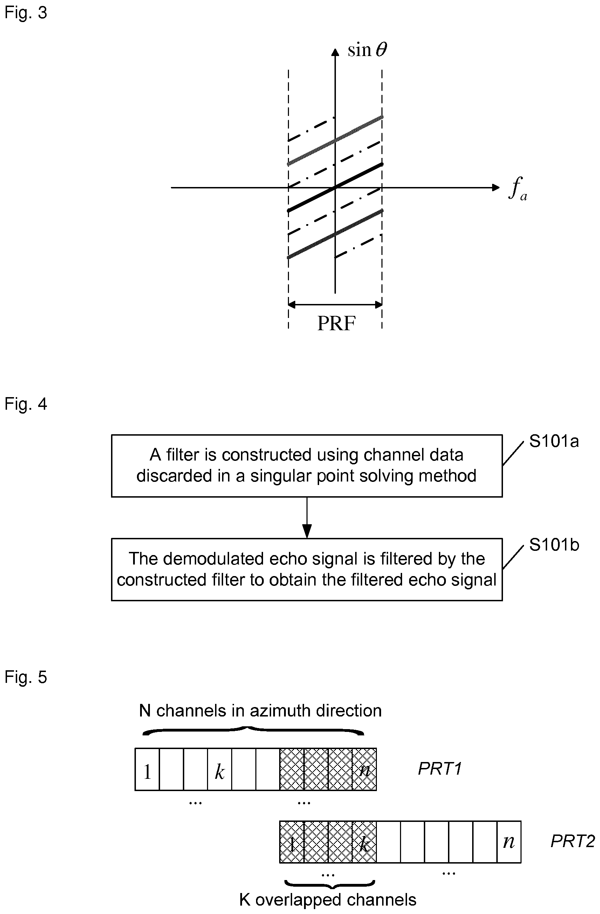

Therefore, by means of steps S100a to S100d of the step S100, it is possible to separate, in the azimuth Doppler domain, the range ambiguous signal of the echo signal from the target signal thereof, Fig. 3 shows position of the range ambiguous signal and of the target signal in the demodulated echo signal in the azimuth Doppler domain, wherein thick lines represent the position of the target signal in the azimuth Doppler domain while dot-and-dash lines represent the position of the range ambiguous signal in the azimuth Doppler domain; here the multi-channel number $N = 3$ and the spectrum shifting factor $M = 2$.

Step S101, the demodulated echo signal is filtered to obtain a filtered echo signal;

specifically, the demodulated echo signal is filtered using channel data discarded in a singular point solving method to acquire the filtered echo signal, and the channel data discarded in the singular point solving method are channel data discarded during reconstruction of an SAR system using the singular point solving method in the prior art.

In the embodiment of the disclosure, as shown in Fig. 4, the step that the demodulated echo signal is filtered to obtain a filtered echo signal may include:

step S101 a, a filter is constructed using channel data discarded in a singular point solving method; and
step S101b, the demodulated echo signal is filtered by the constructed filter to obtain the filtered echo signal.

It should be noted herein that for an ordinary multi-channel system with the multi-channel number being $N$, $N$ degrees of freedom are required to reconstruct non-uniformly sampled signals since multi-channel signals are generally not sampled uniformly, thus there are no extra degrees of freedom to form null at the position of the range ambiguous signal so that the range ambiguous signal can be filtered out. however, the PRF of the multi-channel system is close to or equal to some specific values, the value of PRF can be represented by below expression (4):

$$PRF = \frac{N}{N-k}\frac{2v}{N\Delta x} \quad (4)$$

where $k = 1, 2...N - 1$.

Then, a system response matrix $\mathbf{H(f)}$ of the multi-channel system can be represented by below expression (5):

$$\mathbf{H(f)} = \begin{vmatrix} H_1(f) & ... & H_n(f) \\ H_1(f+PRF) & ... & H_n(f+PRF) \\ ... & ... & ... \\ H_1(f+(N-1)PRF) & ... & H_n(f+(N-1)PRF) \end{vmatrix} \quad (5)$$

where $H_i(f)$ can be represented by below expression (6):

$$H_i(f) = \exp\left[-j\pi\left(\frac{(i-1)^2\Delta x_i^2}{2\lambda R_0} + \frac{(i-1)\Delta x_i}{v}f\right)\right](i=1,2,\cdots,N)(6)$$

where $\lambda$ is the wavelength of a carrier, $R_0$ is a minimum slant distance from a target to a radar, $\Delta x_i$ is an azimuth position of each channel center, $v$ is a flying speed of the radar, and $\Delta x$ is an interval between two adjacent channels.

In the response matrix $\mathbf{H(f)}$ of the expression (5), the first $k$ rows of and the last $k$ rows of $\mathbf{H(f)}$ are equal, namely $\mathbf{H(f)}$ is not a full rank matrix. During practical calculation, a filter required in the reconstruction of the multi-channel system is $\mathbf{P(f)=H^{-1}(f)}$, it is obvious that a correct inversion result can't be obtained since $\mathbf{H(f)}$ is not a full rank matrix, and failure of the reconstruction will be resulted. Here, PRF values corresponding to the last $k$ rows in $\mathbf{H(f)}$ are referred to as singular points.

Fig.5 is a sampling sequence diagram in a case where there is a singular point during reconstruction of a multi-channel system according to related techniques. It can be seen from Fig. 5 that when a system has a singular point, samplings of the last $k$ channels during a previous PRI overlap samplings of the first $k$ channels during its next PRI. Thus, the traditional singular point solving method lies in discarding of data of the last $k$ channels so that $\mathbf{H(f)}$ becomes a full rank matrix, thereby obtaining a correct system reconstruction result.

It can be seen from the above theory that in the embodiment of the disclosure, a filter can be constructed using data of k channels discarded in the singular point solving method so that the demodulated echo signal can be filtered by the constructed filter so as to filter the range ambiguous signal in the echo signal.

Step S102, imaging processing is performed on the filtered echo signal to obtain an imaging result.

Specifically, an imaging result can be obtained from the filtered echo signal using an existing imaging algorithm.

The range ambiguous signal in the echo signal is already filtered out in step S101, thus the imaging result obtained in the embodiment of the disclosure is an ambiguity-inhibited imaging result.

Accordingly, by means of the method for implementing SAR imaging according to the embodiment of the disclosure, it is possible to effectively inhibit range ambiguity of an SAR system around a singular point, thereby improving imaging quality of a multi-channel SAR system.

Further, the method according to the embodiment of the disclosure may further include: a range ambiguity inhibitory effect of the obtained imaging result is determined according to a preset expression for calculating range ambiguity.

Specifically, in order to evaluate the range ambiguity inhibitory effect, the Range Ambiguity Signal Ratio (RASR) can be used to compare the ambiguity inhibitory effect before and after the method for implementing SAR imaging according to the embodiment of the disclosure.

The RASR can be obtained by below formula (7):

$$RASR = \frac{P_{sig}}{\sum P_{amb}} \quad (7)$$

Here $P_{sig}$ is represented by below expression (8) and $P_{amb}$ is represented by below expression (9):

$$P_{sig} = \frac{G_{sig}{}^2}{R_{sig}{}^3 \cdot \sin(\theta_{Inc-sig})} \quad (8)$$

$$P_{amb} = \frac{G_{amb}{}^2}{R_{amb}{}^3 \cdot \sin(\theta_{Inc-amb})} \quad (9)$$

where $G$ represents an antenna directional pattern, $R$ represents a corresponding slant distance, $\theta_{Inc}$ is an incident angle, the subscript *sig* represents a target signal and the subscript *amb* represents a range ambiguous signal.

The imaging effect implemented by the embodiment of the disclosure will be illustrated with reference to a multi-channel spaceborne SAR system.

It should be noted that the multi-channel spaceborne SAR system with performance requirements as shown in Table 1 has a relatively great surveying and mapping width and very poor range ambiguity performance, thus it is necessary to inhibit range ambiguity using the method according to the embodiment of the disclosure.

Table 1

| Orbit height | 700 Km | Emission carrier frequency | 9.6 GHz |
|---|---|---|---|
| Resolution | 1 m | Surveying and mapping width | 50 Km |
| Central viewing angle | 30.34 | RASR restriction | less than -16 dB |
| Multi-channel number | 4 | Phase Transfer factor | 2 |
| PRF | 4080Hz | Number of discarded channels | 1 |

According to design requirements of the system, based on data of one channel discarded in the singular point solving method, a response matrix **H(f)** of the designed system is as shown in below expression (10):

$$\mathbf{H}(f) = \begin{vmatrix} H_1(f) & H_2(f) & H_3(f) & H_4(f) \\ H_1(f+PRF) & H_2(f+PRF) & H_3(f+PRF) & H_4(f+PRF) \\ H_1(f+2PRF) & H_2(f+2PRF) & H_3(f+2PRF) & H_4(f+2PRF) \\ H_1(f+\dfrac{PRF}{2}) & H_2(f+\dfrac{PRF}{2}) & H_3(f+\dfrac{PRF}{2}) & H_4(f+\dfrac{PRF}{2}) \end{vmatrix} \quad (10)$$

where the first three rows are position of three target signal and the last row is position of an inhibited range ambiguous signal.

A filter of the system is constructed through $\mathbf{P}(f)=\mathbf{H}^{-1}(f)$, data of respective channels are passed into the constructed filter to filter out the range ambiguous signal in the echo signal, i.e., the range ambiguous signal is successfully inhibited.

Further, in above specific application, a range ambiguity inhibitory effect of the obtained imaging result can be determined according to a preset formula for calculating range ambiguity, and the worst range ambiguity decreases from -11.44 dB to -17.22 dB. Apparently, by means of the method for implementing SAR imaging according to the embodiment of the disclosure, it is possible to effectively inhibit range ambiguity of an SAR system around a singular point, thereby improving imaging quality of a multi-channel SAR system.

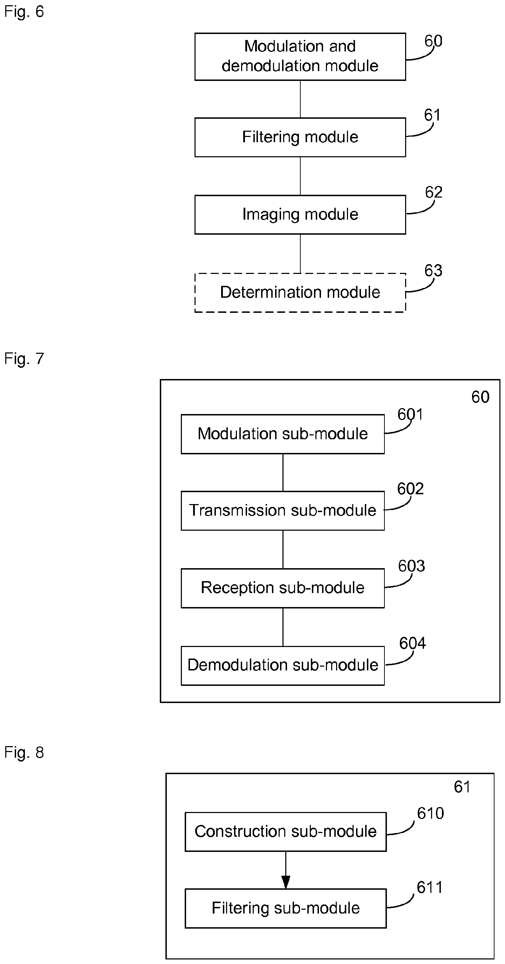

Fig.6 is a schematic structural diagram of a device for implementing SAR imaging according to an embodiment of the disclosure, as shown in Fig. 6, the device for implementing SAR imaging according to the embodiment of the disclosure include a modulation and demodulation module 60, a filtering module 61 and an imaging processing module 62, specifically, the modulation and demodulation module 60 is configured to modulate and demodulate an SAR signal to obtain a demodulated echo signal;

Herein the SAR signal includes an emission signal and an echo signal;

the filtering module 61 is configured to filter the demodulated echo signal to obtain a filtered echo signal; and

the imaging processing module 62 is configured to perform imaging processing on the filtered echo signal to obtain an imaging result.

in an embodiment, the device for implementing SAR imaging may further include:

a determination module 63 configured to determine, according to a preset formula for calculating range ambiguity, a range ambiguity inhibitory effect of the obtained imaging result.

In an embodiment of the disclosure, as shown in Fig. 7, the modulation and demodulation module 60 may include a modulation sub-module 601, a transmission sub-module 602, a reception sub-module 603 and a demodulation sub-module 604,

specifically, the modulation sub-module 601 is configured to perform phase modulation on the emission signal in an azimuth Doppler domain to obtain a modulated emission signal;

the transmission sub-module 602 is configured to transmit the modulated emission signal;

the reception sub-module 603 is configured to receive an echo signal; and

the demodulation sub-module 604 is configured to perform phase demodulation on the echo signal in the azimuth Doppler domain to obtain the demodulated echo signal.

In an embodiment of the disclosure, as shown in Fig. 8, the filtering module 61 may include a construction sub-module 610 and a filtering sub-module 611,

specifically, the construction sub-module 610 is configured to construct a filter using channel data discarded in a singular point solving method; and

the filtering sub-module 611 is configured to filter, through the constructed filter, the demodulated echo signal to obtain the filtered echo signal.

In practical applications, all of the modulation and demodulation module 60, the filtering module 61, the imaging processing module 62, the determination module 63, the modulation sub-module 601, the transmission sub-module 602, the reception sub-module 603, the demodulation sub-module 604, the construction sub-module 610 and the filtering sub-module 611 can be implemented by a Central Processing Unit (CPU), a Micro Processing unit (MPU), a Digital Signal Processor (DSP) or a Field Programmable Gate Array (FPGA) of the device for implementing SAR imaging; in addition, the modulation and demodulation module 60, all of the modulation sub-module 601 and the demodulation sub-module 604 can be implemented by a modem in the device for implementing SAR imaging.

What described are merely preferable embodiments of the disclosure, and are not intended to limit the disclosure.

**Claims**

1. A method for implementing multi-channel Synthetic Aperture Radar (SAR) imaging in a multi-channel SAR system having a singular point, the method comprising:

   performing azimuth phase modulation on an emission signal in an azimuth Doppler domain to obtain a modulated emission signal (S100a), and transmitting the modulated emission signal (S100b);
   receiving an echo signal (S100c), and performing azimuth phase demodulation on the received echo signal in the azimuth Doppler domain to obtain the demodulated echo signal (S100d);
   filtering the demodulated echo signal to obtain a filtered echo signal (S101); and
   performing imaging processing on the filtered echo signal to obtain an imaging result (S102),
   **characterized in that** the filtering the demodulated echo signal to obtain a filtered echo signal (S101) comprises:

   constructing a filter using channel data discarded in a singular point solving method (S101a); and
   filtering, by the constructed filter, the demodulated echo signal to obtain the filtered echo signal (S101b),
   wherein the system response matrix **H(f)** of the multi-channel SAR system is represented by:

$$\mathbf{H(f)} = \begin{vmatrix} H_1(f) & \dots & H_n(f) \\ H_1(f+PRF) & \dots & H_n(f+PRF) \\ \dots & \dots & \dots \\ H_1(f+(N-1)PRF) & \dots & H_n(f+(N-1)PRF) \end{vmatrix},$$

   wherein $H_i(f)$ is represented by:

$$H_i(f) = \exp\left[-j\pi\left(\frac{(i-1)^2 \Delta x_i^2}{2\lambda R_0} + \frac{(i-1)\Delta x_i}{v}f\right)\right](i=1,2,\cdots,N),$$

   where $\lambda$ is the wavelength of a carrier, $R_0$ is a minimum slant distance from a target to a radar, $\Delta x_i$ is an azimuth position of each channel center, $v$ is a flying speed of the radar, and $\Delta x$ is an interval between two adjacent channels,
   wherein PRF values corresponding to the last $k$ rows in **H(f)** are referred to as singular points.

2. The method according to claim 1, further comprising:

   determining, according to a preset formula for calculating range ambiguity, a range ambiguity inhibitory effect of the obtained imaging result.

3. A device for implementing multi-channel Synthetic Aperture Radar (SAR) imaging in a multi-channel SAR system having a singular point, the device comprising:

   a modulation sub-module (601) configured to perform azimuth phase modulation on an emission signal in an azimuth Doppler domain to obtain a modulated emission signal;
   a transmission sub-module (602) configured to transmit the modulated emission signal;
   a reception sub-module (603) configured to receive an echo signal;
   a demodulation sub-module (604) configured to perform azimuth phase demodulation on the received echo signal in the azimuth Doppler domain to obtain the demodulated echo signal;
   a filtering module (61) configured to filter the demodulated echo signal to obtain a filtered echo signal; and
   an imaging processing module (62) configured to perform imaging processing on the filtered echo signal to obtain an imaging result,
   **characterized in that** the filtering module (61) includes:

   a construction sub-module (610) configured to construct a filter using channel data discarded in a singular point solving method; and
a filtering sub-module (611) configured to filter, through the constructed filter, the demodulated echo signal to obtain the filtered echo signal,
wherein the system response matrix **H(f)** of the multi-channel SAR system is represented by:

$$\mathbf{H(f)} = \begin{vmatrix} H_1(f) & ... & H_n(f) \\ H_1(f+PRF) & ... & H_n(f+PRF) \\ ... & ... & ... \\ H_1(f+(N-1)PRF) & ... & H_n(f+(N-1)PRF) \end{vmatrix},$$

wherein $H_i(f)$ is represented by:

$$H_i(f) = \exp\left[-j\pi\left(\frac{(i-1)^2\Delta x_i^2}{2\lambda R_0} + \frac{(i-1)\Delta x_i}{v}f\right)\right](i=1,2,\cdots,N),$$

where $\lambda$ is the wavelength of a carrier, $R_0$ is a minimum slant distance from a target to a radar, $\Delta x_i$ is an azimuth position of each channel center, $v$ is a flying speed of the radar, and $\Delta x$ is an interval between two adjacent channels,
wherein PRF values corresponding to the last $k$ rows in **H(f)** are referred to as singular points.

4. The device according to claim 3 , further comprising:

a determination module (63) configured to determine, according to a preset formula for calculating range ambiguity, a range ambiguity inhibitory effect of the obtained imaging result.


**Patentansprüche**

1. Verfahren zum Implementieren einer Mehrkanal-Synthetik-Apertur-Radar-Bildgebung, Mehrkanal-SAR-Bildgebung, in einem Mehrkanal-SAR-System mit einem Einzelpunkt, wobei das Verfahren Folgendes umfasst:

Ausführen einer Azimut-Phasenmodulation an einem Sendesignal in einem Azimut-Doppler-Bereich, um ein moduliertes Sendesignal (S100a) zu erhalten, und Übertragen des modulierten Sendesignals (S100b);
Empfangen eines Echosignals (S100c) und Ausführen einer Azimut-Phasendemodulation am empfangenen Echosignal im Azimut-Doppler-Bereich, um das demodulierte Echosignal (S100d) zu erhalten;
Filtern des demodulierten Echosignals, um ein gefiltertes Echosignal (S101) zu erhalten; und
Ausführen von Bildverarbeitung am gefilterten Echosignal, um ein Bildergebnis (S102) zu erhalten,
**dadurch gekennzeichnet, dass** das Filtern des demodulierten Echosignals zum Erhalten eines gefilterten Echosignal (S101) Folgendes umfasst:

Aufbauen eines Filters unter Verwendung von in einem Einzelpunkt-Lösungsverfahren (S101a) verworfenen Kanaldaten und
Filtern des demodulierten Echosignals durch den aufgebauten Filter, um das gefilterte Echosignal (S101b) zu erhalten,
wobei die Systemreaktionsmatrix **H(f)** des Mehrkanal-SAR-Systems dargestellt ist durch:

$$\mathbf{H(f)} = \begin{vmatrix} H_1(f) & \dots & H_n(f) \\ H_1(f+PRF) & \dots & H_n(f+PRF) \\ \dots & \dots & \dots \\ H_1(f+(N-1)PRF) & \dots & H_n(f+(N-1)PRF) \end{vmatrix},$$

wobei $H_i(f)$ dargestellt ist durch:

$$H_i(f) = \exp\left[-j\pi\left(\frac{(i-1)^2 \Delta x_i^2}{2\lambda R_0} + \frac{(i-1)\Delta x_i}{v}f\right)\right] (i = 1, 2, \cdots, N),$$

wobei $\lambda$ die Wellenlänge eines Trägers ist, $R_0$ eine Mindestgefälledistanz von einem Ziel zu einem Radar ist, $\Delta x_i$ eine Azimut-Position jeder Kanalmitte ist, v eine Fluggeschwindigkeit des Radars ist und $\Delta x$ ein Intervall zwischen zwei benachbarten Kanälen ist,
wobei PRF-Werte, die den letzten $k$ Zeilen in **H(f)** entsprechen, als Einzelpunkte bezeichnet werden.

2. Verfahren nach Anspruch 1, ferner umfassend:

Bestimmen einer Entfernungsmehrdeutigkeitshemmwirkung des erhaltenen Bildergebnisses nach einer voreingestellten Formel zur Entfernungsmehrdeutigkeitsberechnung.

3. Vorrichtung zum Implementieren einer Mehrkanal-Synthetik-Apertur-Radar-Bildgebung, Mehrkanal-SAR-Bildgebung, in einem Mehrkanal-SAR-System mit einem Einzelpunkt, wobei die Vorrichtung Folgendes umfasst:

ein Modulationsuntermodul (601), das dazu gestaltet ist, eine Azimut-Phasenmodulation an einem Sendesignal in einem Azimut-Doppler-Bereich auszuführen, um ein moduliertes Sendesignal zu erhalten;
ein Übertragungsuntermodul (602), das dazu gestaltet ist, das modulierte Sendesignal zu übertragen;
ein Empfangsuntermodul (603), das dazu gestaltet ist, ein Echosignal zu erhalten;
ein Demodulationsuntermodul (604), das dazu gestaltet ist, eine Azimut-Phasendemodulation am empfangenen Echosignal im Azimut-Doppler-Bereich auszuführen, um das demodulierte Echosignal zu erhalten;
ein Filtermodul (61), das dazu gestaltet ist, das demodulierte Echosignal zu filtern, um ein gefiltertes Echosignal zu erhalten; und
ein Bildverarbeitungsmodul (62), das dazu gestaltet ist, Bildverarbeitung am gefilterten Echosignal auszuführen, um ein Bildergebnis zu erhalten,
**dadurch gekennzeichnet, dass** das Filtermodul (61) Folgendes einschließt:

ein Aufbauuntermodul (610), das dazu gestaltet ist, einen Filter unter Verwendung von in einem Einzelpunkt-Lösungsverfahren verworfenen Kanaldaten aufzubauen; und
ein Filteruntermodul (611), das dazu gestaltet ist, das demodulierte Echosignal durch den aufgebauten Filter zu filtern, um das gefilterte Echosignal zu erhalten,
wobei die Systemreaktionsmatrix **H(f)** des Mehrkanal-SAR-Systems dargestellt ist durch:

$$\mathbf{H(f)} = \begin{vmatrix} H_1(f) & \dots & H_n(f) \\ H_1(f+PRF) & \dots & H_n(f+PRF) \\ \dots & \dots & \dots \\ H_1(f+(N-1)PRF) & \dots & H_n(f+(N-1)PRF) \end{vmatrix},$$

wobei $H_i(f)$ dargestellt ist durch:

$$H_i(f) = \exp\left[-j\pi\left(\frac{(i-1)^2 \Delta x_i^2}{2\lambda R_0} + \frac{(i-1)\Delta x_i}{v}f\right)\right](i=1,2,\cdots,N)$$

,

wobei λ die Wellenlänge eines Trägers ist, $R_0$ eine Mindestgefälledistanz von einem Ziel zu einem Radar ist, $\Delta x_i$ eine Azimut-Position jeder Kanalmitte ist, v eine Fluggeschwindigkeit des Radars ist und $\Delta x$ ein Intervall zwischen zwei benachbarten Kanälen ist,

wobei PRF-Werte, die den letzten $k$ Zeilen in **H(f)** entsprechen, als Einzelpunkte bezeichnet werden.

4. Vorrichtung nach Anspruch 3, ferner umfassend:

ein Bestimmungsmodul (63), das dazu gestaltet ist, nach einer voreingestellten Formel zur Entfernungsmehrdeutigkeitsberechnung eine Entfernungsmehrdeutigkeitshemmwirkung des erhaltenen Bildergebnisses zu bestimmen.

**Revendications**

1. Procédé d'implémentation d'une imagerie multicanal à radar à synthèse d'ouverture (SAR-Synthetic Aperture Radar) dans un système multicanal SAR à point singulier, ledit procédé comprenant :

l'exécution d'une modulation de phase azimutale sur un signal d'émission dans un domaine Doppler azimutal afin d'obtenir un signal d'émission modulé (S100a), et la transmission du signal d'émission modulé (S100b) ;
la réception d'un signal d'écho (S100c), et l'exécution d'une démodulation de phase azimutale sur le signal d'écho reçu dans le domaine Doppler azimutal afin d'obtenir le signal d'écho démodulé (S100d) ;
le filtrage du signal d'écho démodulé afin d'obtenir un signal d'écho filtré (S101) ; et l'exécution d'un traitement d'image sur le signal d'écho filtré afin d'obtenir un résultat d'image (S102),
**caractérisé en ce que** le filtrage du signal d'écho démodulé afin d'obtenir un signal d'écho filtré (S101) comprend :

la construction d'un filtre au moyen de données de canaux rejetées dans une méthode de résolution à point singulier (S101a) ; et
le filtrage par le filtre construit du signal d'écho démodulé afin d'obtenir le signal d'écho filtré (S101b),
la matrice réponse système **H(f)** of the système multicanal SAR étant représentée par :

$$\mathbf{H(f)} = \begin{vmatrix} H_1(f) & \dots & H_n(f) \\ H_1(f+PRF) & \dots & H_n(f+PRF) \\ \dots & \dots & \dots \\ H_1(f+(N-1)PRF) & \dots & H_n(f+(N-1)PRF) \end{vmatrix},$$

où $H_i(f)$ est représenté par :

$$H_i(f) = \exp\left[-j\pi\left(\frac{(i-1)^2 \Delta x_i^2}{2\lambda R_0} + \frac{(i-1)\Delta x_i}{v}f\right)\right](i=1,2,\cdots,N)$$

,

λ étant la longueur d'onde d'une porteuse, $R_0$ une distance oblique minimale d'une cible à un radar, $\Delta x_i$ une position azimutale de chaque centre de canal, v une vitesse de vol du radar, et $\Delta x$ un intervalle entre deux canaux adjacents,
les valeurs PRF correspondant aux dernières rangées $k$ en **H(f)** étant qualifiées de points singuliers.

2. Procédé selon la revendication 1, comprenant en outre :

la détermination, en fonction d'une formule prédéfinie pour le calcul du rang d'ambiguïté, d'un effet d'inhibition de rang d'ambiguïté du résultat d'image obtenu.

3. Dispositif pour l'implémentation d'une imagerie multicanal à radar à synthèse d'ouverture (SAR) dans un système multicanal SAR à point singulier, ledit dispositif comprenant :

un sous-module de modulation (601) prévu pour l'exécution d'une modulation de phase azimutale sur un signal d'émission dans un domaine Doppler azimutal afin d'obtenir un signal d'émission modulé ;
un sous-module de transmission (602) prévu pour la transmission du signal d'émission modulé ;
un sous-module de réception (603) prévu pour la réception d'un signal d'écho ;
un sous-module de démodulation (604) prévu pour l'exécution d'une démodulation de phase azimutale sur le signal d'écho reçu dans le domaine Doppler azimutal afin d'obtenir le signal d'écho démodulé ;
un module de filtrage (61) prévu pour le filtrage du signal d'écho démodulé afin d'obtenir un signal d'écho filtré ; et
un module de traitement d'image (62) prévu pour exécuter un traitement d'image sur le signal d'écho filtré afin d'obtenir un résultat d'image,
**caractérisé en ce que** le module de filtrage (61) comprend :

un sous-module de construction (610) prévu pour la construction d'un filtre au moyen de données de canaux de données de canaux rejetées dans une méthode de résolution à point singulier ; et
un sous-module de filtrage (611) prévu pour le filtrage par le filtre construit du signal d'écho démodulé afin d'obtenir le signal d'écho filtré,
la matrice réponse système **H(f)** du système multicanal SAR étant représentée par :

$$\mathbf{H(f)} = \begin{vmatrix} H_1(f) & ... & H_n(f) \\ H_1(f+PRF) & ... & H_n(f+PRF) \\ ... & ... & ... \\ H_1(f+(N-1)PRF) & ... & H_n(f+(N-1)PRF) \end{vmatrix},$$

où $H_i(f)$ est représenté par :

$$H_i\left(f\right) = \exp\left[-j\pi\left(\frac{(i-1)^2\Delta x_i^2}{2\lambda R_0} + \frac{(i-1)\Delta x_i}{v}f\right)\right](i=1,2,\cdots,N),$$

$\lambda$ étant la longueur d'onde d'une porteuse, $R_0$ une distance oblique minimale d'une cible à un radar, $\Delta x_i$ une position azimutale de chaque centre de canal, $v$ une vitesse de vol du radar, et $\Delta x$ un intervalle entre deux canaux adjacents,
les valeurs PRF correspondant aux dernières rangées $k$ en **H(f)** étant qualifiées de points singuliers.

4. Dispositif selon la revendication 3, comprenant en outre :

un module de détermination (63) prévu pour la détermination, en fonction d'une formule prédéfinie pour le calcul du rang d'ambiguïté, d'un effet d'inhibition de rang d'ambiguïté du résultat d'image obtenu.

Fig. 1

An SAR signal is modulated and demodulated to obtain a demodulated echo signal  S100

The demodulated echo signal is filtered to obtain a filtered echo signal  S101

Imaging processing is performed on the filtered echo signal to obtain an imaging result  S102

Fig. 2

Phase modulation is performed on the emission signal in an azimuth Doppler domain to obtain a modulated emission signal  S100a

The modulated emission signal is transmitted  S100b

An echo signal is received  S100c

Phase demodulation is performed on the echo signal in the azimuth Doppler domain to obtain the demodulated echo signal  S100d

Fig. 3

Fig. 4

A filter is constructed using channel data discarded in a singular point solving method — S101a

The demodulated echo signal is filtered by the constructed filter to obtain the filtered echo signal — S101b

Fig. 5

N channels in azimuth direction

PRT1

PRT2

K overlapped channels

Fig. 6

| Modulation and demodulation module | 60 |

| Filtering module | 61 |

| Imaging module | 62 |

| Determination module | 63 |

Fig. 7

60

| Modulation sub-module | 601 |

| Transmission sub-module | 602 |

| Reception sub-module | 603 |

| Demodulation sub-module | 604 |

Fig. 8

61

| Construction sub-module | 610 |

| Filtering sub-module | 611 |

## REFERENCES CITED IN THE DESCRIPTION

### Patent documents cited in the description

- CN 103869313 A

### Non-patent literature cited in the description

- **FEDERICA BORDONI.** Ambiguity Suppression by Azimuth Phase Coding in Multichannel SAR Systems. *IEEE Transactions on Geoscience and Remote Sensing,* 01 February 2012, vol. 50 (2), 617-629, http://ieeexplore.ieee.org/xpl/RecentIssue.jsp?punumber=36

- **DALL J.** Azimuth phase coding for range ambiguity suppression in SAR. *Geoscience and Remote Sensing Symposium, 2004. IGARSS '04. Proceedings. 2004 IEEE International,* 20 September 2004, vol. 3, 1734-1737